# FASCICULE DE BREVET EUROPEEN

(11) **EP 0 425 046 B1**
(45) Date de publication et mention de la délivrance du brevet: **17.05.1995**
(21) Numéro de dépôt: 90202823.2
(22) Date de dépôt: 23.10.1990
(51) Int. Cl.: H04L 5/24

(54) **Procédé et dispositif pour transmettre une suite de M mots binaires de "p" éléments binaires**
Verfahren und Vorrichtung zur Übertragung von einer aus M binären Worten aus "p" Binärelementen bestehenden Reihe
Method and device for transmitting a string of M binary words, each of "p" binary elements

(30) Priorité: 27.10.1989 FR 8914140
(43) Date de publication de la demande: 02.05.1991
(73) Titulaire: TRT TELECOMMUNICATIONS RADIOELECTRIQUES ET TELEPHONIQUES, 75013 Paris (FR); Philips Electronics N.V., 5621 BA Eindhoven (NL)
(72) Inventeur: Bellon, Gilles, F-75008 Paris (FR)
(74) Mandataire: Chaffraix, Jean

(56) Documents cités:
- DE-A- 3 126 880
- US-A- 3 310 626
- US-A- 4 126 764

## Description

La présente invention concerne un procédé pour transmettre une suite de M mots formés de "p" éléments binaires au moyen de blocs d'éléments binaires dont la capacité est de (k.p-Δ) éléments binaires où k et Δ sont des entiers et Δ<p.

Des procédés de ce genre sont extrêmement répandus et trouvent donc d'importantes applications. Parmi celles-ci l'invention se rapporte plus particulièrement aux liaisons radioélectriques.

Dans ce domaine, différentes organisations nationales officielles imposent des normes pour organiser les transmission radioélectriques qui tiennent compte de la nature incertaine et fluctuante de ce type de transmission.

Cependant, certaines de ces normes, bien adaptées aux réseaux radioélectriques, prévoient de transmettre les éléments binaires par blocs contenant un nombre d'éléments binaires qui n'est pas un multiple du nombre des éléments binaires composant les nombres à transmettre. On fait ici, notamment, allusion à la norme britannique MPT1317 éditée par le D.T.I. (Department Trade of Industry) qui propose de transmettre des données par des blocs de 47 éléments binaires utiles ; or les formats de mots binaires sont bien souvent à 8 ou à 16 éléments binaires. Ainsi ces blocs ne peuvent pas transmettre ces mots dans leur intégralité si on veut les utiliser pleinement.

Dans les liaisons radioélectriques, il est souhaitable, pour être sûr de la transmission, d'envoyer les blocs par paquets et de s'assurer, par une procédure de vérification, que chaque paquet est bien reçu avant d'envoyer le suivant. On se rend compte alors qu'il est parfaitement indésirable d'avoir un mot binaire qui est contenu dans deux paquets différents.

La présente invention propose un procédé du genre mentionné dans le préambule qui évite cet inconvénient.

Pour cela, un tel procédé est remarquable en ce qu'un bloc au moins, dit bloc d'en-tête, comporte une information indiquant la valeur N et la valeur de N.Δ éléments binaires.

L'invention concerne ausi un dispositif de transmission pour la mise en oeuvre du procédé.

La description suivante, accompagnée des dessins ci-annexés, le tout donné à titre d'exemple non limitatif, fera bien comprendre comment l'invention peut être réalisée.

La figure 1 montre la constitution des blocs utilisés pour la transmission d'une suite de mots.

La figure 2 illustre la répartition des éléments binaires de mots à transmettre dans les blocs.

La figure 3 montre la constitution d'un bloc d'entête.

La figure 4 montre un schéma d'un dispositif de transmission mettant en oeuvre le procédé de l'invention.

La figure 5 montre un organigramme définissant le procédé d'émission des mots.

La figure 6 montre un organigramme définissant le procédé de réception des mots.

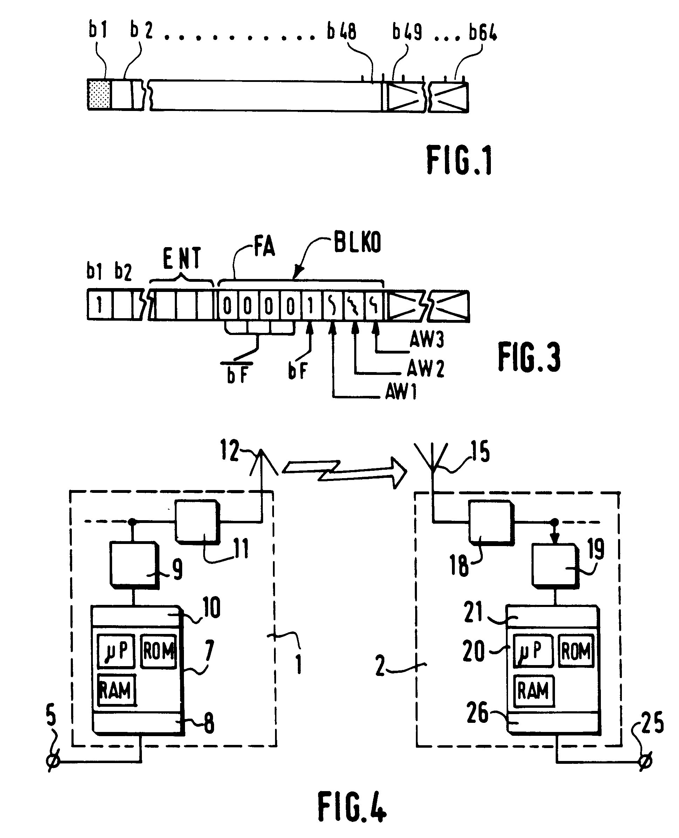

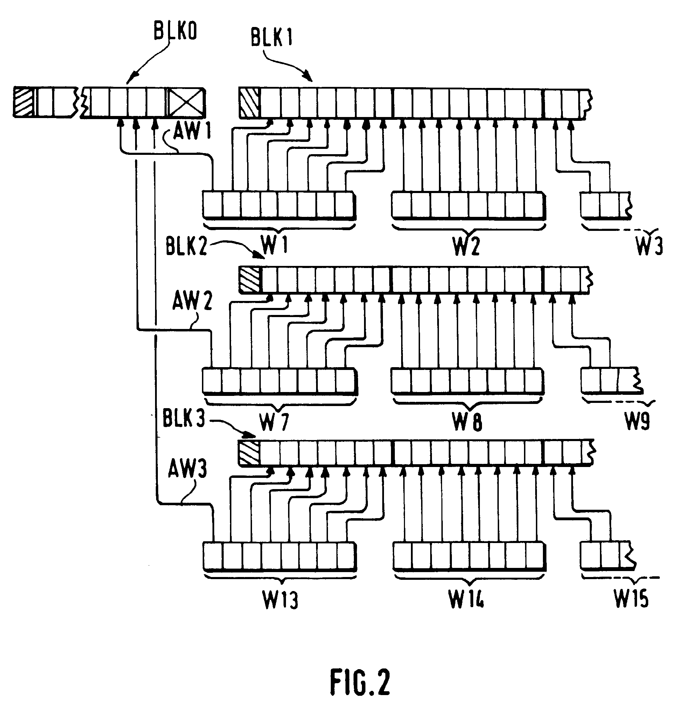

La figure 1 montre la structure d'un bloc répondant à la norme 1317 décrivant un format de signalisation de base.

Ce bloc est formé de 64 emplacements pour contenir des éléments binaires référencés par b₁...b₆₄.

L'élément binaire b₁, lorsqu'il est à "1", indique que le bloc contient un mot de code d'adresse et lorsqu'il est à "0", que le bloc contient un mot de code de donnée.

Les 47 éléments binaires b₂ à b₄₈ définissent l'information utile à transmettre.

Les éléments binaires b₄₉ à b₆₄ sont des éléments binaires de contrôle utilisés par un traitement propre à assurer une certaine sécurité de transmission. Ce traitement n'entre pas dans le cadre de l'invention et ne sera donc point décrit.

La figure 2 illustre le procédé de l'invention. Sur cette figure, les différents blocs portent les références BLK0, BKL1, BLK2, BLK3... Les M mots W1, W2, W3,... W18 sont formés, dans le cadre de cet exemple décrit, de huit éléments binaires, de sorte que la capacité de chaque bloc est de 6 mots moins un élément binaire ; en d'autres termes : k = 6, p = 8 et Δ = 1.

Toujours à titre d'exemple, on propose alors d'envoyer une suite formée des 18 mots W1,... W18. Selon l'invention, cette suite sera transmise dans quatre blocs BLK0, BLK1, BLK2, BLK3. Le premier bloc ou bloc d'en-tête, contient une indication (qui sera explicitée par la suite) sur le nombre de blocs utilisés pour transmettre la suite et trois éléments binaires qui ne peuvent pas tenir dans les blocs BLK1, BLK2 et BLK3. Ainsi, le premier élément binaire de W1 sera contenu dans un emplacement du bloc BLK0 comme l'indique la flèche AW1, les reste du mot W1 et les mots W2 à W6 seront contenus dans le bloc BLK1. D'une manière similaire le premier élément binaire du mot W7 sera mis dans le bloc BLK0, comme indiqué par la flèche AW2, le reste de ce mot et les mots W8 à W12 seront contenus dans le bloc BLK2. Enfin, le premier élément binaire du mot W13 est mis, comme l'indique la flèche AW3, dans le bloc BLK0 et le reste de ce mot ainsi que les derniers mots W13 à W18 de la suite seront contenus dans le bloc BLK3.

L'indication du nombre de blocs utilisés pour transmettre la suite est explicitée maintenant, à l'aide de la figure 3.

Sur cette figure, on a représenté le bloc BLK0 et on a distingué un champ FΔ destiné à contenir les premiers éléments binaires des différents mots W1, W7, W13. Selon une caractéristique de l'invention, on fait précéder les différents éléments binaires précités d'un élément binaire bF de valeur déterminée, par exemple "1". Les autres éléments binaires b̅F̅ du champ FΔ ayant la valeur opposée ("0" naturellement).

Ainsi, connaissant la taille du champ FΔ, la détection de l'élément binaire bF précédé d'éléments binaires b̅F̅ permet donc de déterminer le taux d'occupation de ce champ et de là de donner le nombre de blocs utilisés pour transmettre la suite. Ainsi, grâce à cette caractéristique, un seul élément binaire supplémentaire peut être nécessaire pour transmettre cette indication. Le bloc BLK0 contient aussi les informations ENT définissant un en-tête pour dire que ce bloc est un bloc de déclaration pour la transmission du message composé des mots transmis dans les blocs suivants.

A la figure 4, on a montré d'une manière schématique un dispositif mettant en oeuvre le procédé de l'invention.

Sur cette figure, la référence 1 montre la partie émission du dispositif et la référence 2, la partie réception. La partie émission est munie d'une borne 5 pour recevoir les mots W(1), W(2),..., W(F) à transmettre. Ces mots sont traités par un circuit de traitement d'émission 7 qui les reçoit par l'intermédiaire d'un coupleur 8 qui permet une conversion série-parallèle ou par l'intermédiaire de tout autre dispositif propre à assurer une interface correcte. Ce coupleur est constitué par un USART, par exemple. Une fois traités par le circuit 7 les données à transmettre sont appliquées à un circuit modulateur 9 par l'intermédiaire d'un coupleur 10. Ainsi un circuit d'émission 11 les transmet, via l'antenne 12, par voie hertzienne, vers la partie réception 2. Celle-ci reçoit l'émission de la partie 1 par l'intermédiaire de l'antenne 15 ; un circuit de réception 18 fournit des signaux à un circuit démodulateur 19 qui les fournit à un circuit de traitement de réception 20 par l'intermédiaire d'un coupleur 21. Les mots transmis WR(1), WR(2), ..., WR(F) sont rendus disponibles à une borne 25 reliée en sortie d'un coupleur 26 accouplé au circuit 20. Les coupleur 10, 21 et 26 peuvent être du même type que celui du coupleur 8.

Les circuits 7 et 20 peuvent être situés au sein d'un même appareil qui sert tant en émission qu'en réception. Ces circuits sont constitués entre autres d'une manière conventionnelle de microprocesseurs, de mémoires de travail et d'une mémoire de programme. C'est dans cette mémoire de programme qu'on inscrit les instructions définissant la mise en oeuvre du procédé de l'invention.

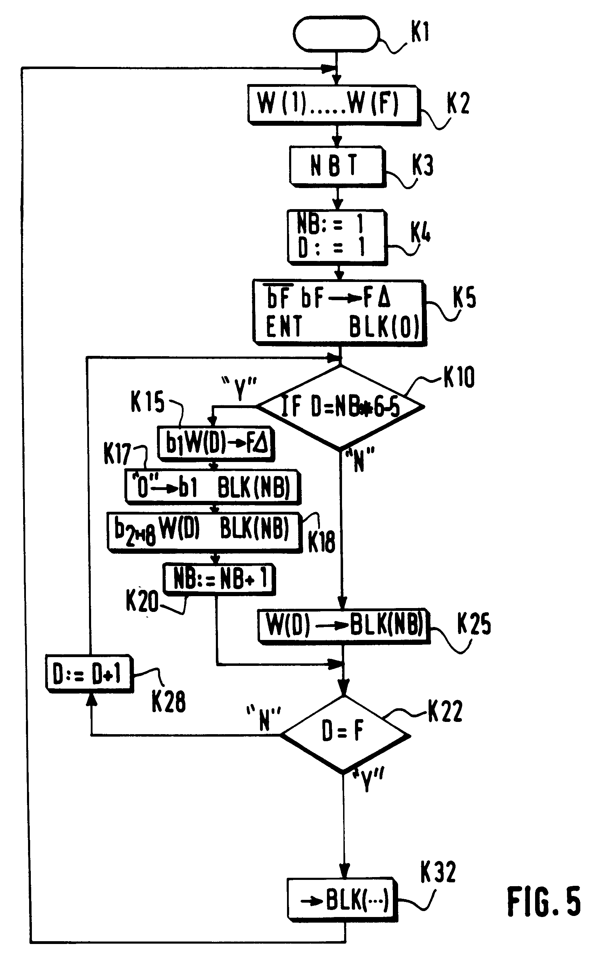

La figure 5 est un organigramme qui montre comment l'émission des données est effectuée. Cet organigramme est composé de différentes cases.

A la case K1, on indique le début du programme ; la case K2 indique que F mots W(1),..., W(F) sont emmagasinés dans la mémoire du circuit 7 et doivent être transmis. La case K3 montre les opérations pour déterminer le nombre de blocs NBT à utiliser pour transmettre ces F mots. A la case K4, on initialise différentes variables qui donnent NB : le numéro du bloc et D : le numéro du mot. La case K5 montre la préparation du bloc BLK(0) qui contient l'entête ENT et les éléments binaires b̅F̅ et bF qui fixent, comme cela a été décrit ci-dessus, le nombre de blocs utilisés (le nombre de b̅F̅ est lié directement au nombre NBT).

La case K10 indique un test sur le numéro du mot à transmettre. Est-il le premier d'un bloc ?

Si la réponse est positive, on prend la branche "Y" pour aboutir à la case K15. A cette case K15 est indiqué l'opération selon laquelle le premier bit du mot W(..) de début de bloc est mis en tant que correcteur dans le champ FΔ à l'emplacement défini par NB. Puis, le bloc qui va transmettre les mots est préparé, c'est-à-dire que "0" va être mis à l'emplacement b₁, ce qui est montré à la case K17. Les 7 bits du premier mot de bloc sont rangés dans le bloc concerné case K18. Le numéro NB est incrémenté d'une unité à la case K20. De là on va à la case K22.

Si la réponse est négative au test indiqué à la case K10, tout le mot est mis dans le bloc (case K25). Puis on passe à la case K22.

A la case K22, on teste si le mot est le dernier, si non on prend la branche "N" du test et on retourne à la case K10, en passant par la case K28 où on incrémente D. Si le test de la case K22 se révèle positif on prend la branche "Y" pour aller à la case K32 qui indique le processus d'émission ; de cette case on peut aller à la case K2 rechercher une autre suite de mots à transmettre.

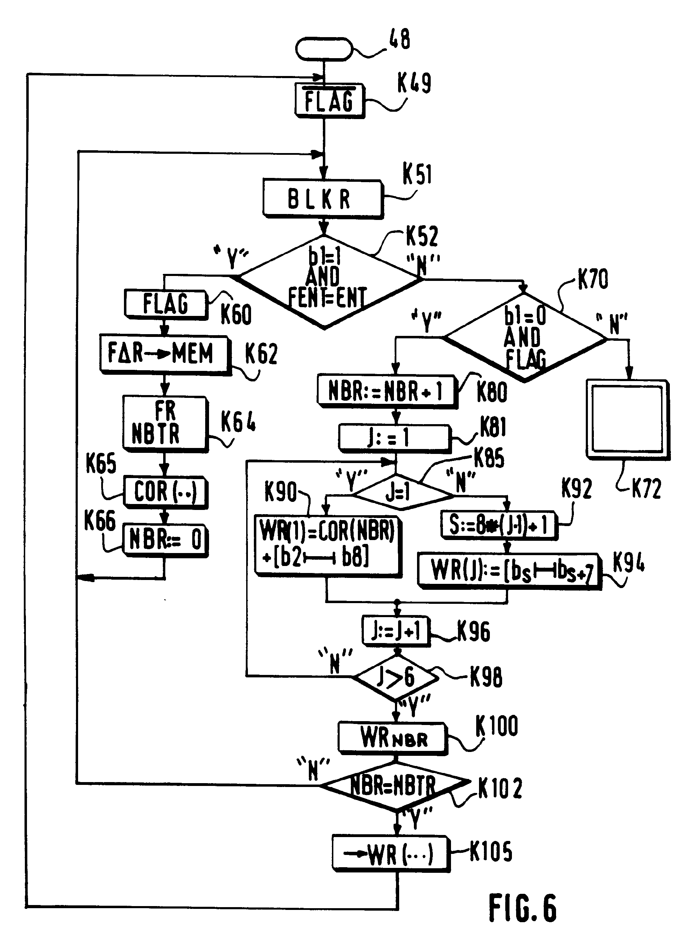

La figure 6 montre un organigramme définissant le programme qui traite les blocs reçus BLKR(..) pour restituer les mots reçus WR(..).

La case K48 indique le début de ce programme. A la case K49 on initialise un drapeau FLAG qui prend la valeur F̅L̅A̅G̅. La case K51 indique que tout un bloc est dans la mémoire de travail du circuit 20 et que ce bloc peut être traité dans des étapes qui suivent. On analyse tout d'abord (case K52), le premier élément binaire b₁ de ce bloc et s'il existe un en-tête signifiant que les blocs suivant celui-ci vont transmettre des mots W(..). Si le test est positif on passe sur la branche "Y", on positionne (case K60) le drapeau FLAG pour concrétiser le test de la case K52. Le champ FΔR est alors analysé (case K62), il est mis dans une mémoire de travail MEM ; on en retire (case K64) le nombre de mots FR qui vont être reçus et le nombre de blocs NBTR utilisés pour les transmettre. La case K65 montre que les éléments binaires de correction COR(.) sont préparés à être traités par la suite. Puis, comme l'indique la case K66, on initialise un compteur NBR de blocs reçus.

Si le test de la case K52 est négatif on prend la branche "N" pour effectuer un test supplémentaire indiqué à la case K70. Ce test a pour but de déterminer si le bloc reçu est à rattacher ou non au bloc d'en-tête défini à la branche "Y" du test de la case K52. Pour cela, on teste si l'élément binaire b₁ = 0 et si le drapeau FLAG a été positionné. Si ce test n'est pas vérifié on prend la branche "N" pour aller à une case K72 relative à un traitement de gestion de faisant pas partie de l'invention. Si le test de la case K70 est vérifié on prend la branche "Y" et l'on va à la case K80 ; là le compteur NBR est incrémenté d'une unité.

A la case K81 on initialise un compteur de mots contenus dans les blocs BLKR reçus. Si ce pointeur est sur un "1", ce qui est testé à la case K85, on prend la branche "Y" pour aller à la case K90. A cette case K90, on reconstitue le premier mot du bloc qui est formé de l'élément COR(NBR) déterminé à la case K65 et des 7 éléments binaires b₂ à b₈ du bloc traité. Si le test à la case K85 est négatif, on prend la branche "N" pour aller à la case K92 où l'on met à jour un pointeur de début de mot S. Ce pointeur donne l'emplacement du premier élément binaire des mots contenus dans le bloc traité. Ceci permet donc de restituer les mots WR (case K94). Depuis les cases K90 et K94 on va à la case K96 où le compteur de mots J est incrémenté. Le contenu de ce compteur est testé par rapport au nombre de mots contenus dans les blocs (ici 6). Si tous les mots n'ont pas été traités, on va à la case K85 en prenant la branche "N", sinon on prend la branche "Y" pour aller à la case K100 où tous les mots du bloc traités sont rangés dans une mémoire d'attente. Puis, à la case K102, on teste si tous les blocs ont bien été reçus. Si oui, on va à la case K105 en prenant la branche "Y", sinon on retourne à la case K51. La case K105 indique que tous les mots de la suite sont restitués à la borne 25 (figure 4) avec ou sans traitement additionnel.

## Revendications

1. Procédé pour transmettre une suite de M mots (W1, W2, ...) formés de "p" éléments binaires au moyen de N blocs BLK1, BLK2, ... d'éléments binaires dont la capacité est de chacun (k.p-Δ) éléments binaires où k et Δ sont des entiers et Δ<p, caractérisé en ce qu'un bloc au moins, dit bloc d'entête (BLK0), comporte une information indiquant la valeur N et la valeur de N.Δ éléments binaires.

2. Procédé selon la revendication 1, caractérisé en ce qu'il est prévu un champ de longueur fixe (FA) dans le bloc d'entête pour contenir les N.Δ éléments binaires et en ce que le taux d'occupation de ce champ est utilisé pour fournir le nombre N de blocs utilisés pour transmettre la suite de M mots.

3. Dispositif de transmission dans lequel le procédé de la revendication 1 ou 2 est mis en oeuvre, caractérisé en ce qu'il comporte une partie émission (1) pour découper un ensemble de M mots de "p" éléments binaires en des blocs (BLK1, BLK2, ...) de capacité (kp-Δ) éléments binaires, pour déterminer un bloc d'entête (BLK0) contenant N.Δ éléments binaires (AW1, AW2, ...) et une partie réception (2) pour recevoir le bloc d'entête et pour restituer les N.Δ éléments binaires des mots transmis dans les blocs suivant le bloc d'entête.

## Claims

1. Method of transmitting a sequence of M binary words (W₁, W₂, ...) formed by "p" bits by means of (N) codewords (BLK1, BLK2, ...) of bits of which the capacity is (k.p-Δ) bits where k and are integers and Δ<p, characterised in that at least one codeword, termed header codeword (BLK0), comprises information denoting the value N and the value of N.Δ bits.

2. Method as claimed in claim 1, characterised in that in the header codeword a field is provided having a fixed length (FA) for containing the N.Δ bits and in that the occupation rate of this field is used for producing the number (N) of codewords used for transmitting the sequence of M binary words.

3. Transmission arrangement for carrying out the method as claimed in claim 1 or 2, characterised in that it comprises a send part (1) for subdividing a set of M binary words of "p" elements into codewords (BLK1, BLK2, ...) having a capacity of (kp-Δ) bits, for determining a header codeword (BLK0) containing N.Δ bits (AW1, AW2, ...) and includes a receive part (2) for receiving the header codeword and for recovering the N.Δ bits of the binary words transmitted in codewords after the header codeword.

## Patentansprüche

1. Verfahren für die Übertragung einer Reihe von M Worten (W1, W2, ...), die aus "p" Binärelementen gebildet wird, was mittels (N) Blöcken (BLK1, BLK2, ...) von Binärelementen geschieht, deren Kapazitat (k.p-Δ) Binärelemente ist, wobei k und Δ Ganze Zahlen sind und Δ < p ist, und das dadurch gekennzeichnet, daß zumindest ein Block, ein sogenannter Kopfblock (BLKO), eine Information enthält, die den Wert N und den Wert von N·Δ Binärelementen anzeigt.

2. Verfahren gemäß Patentanspruch 1, dadurch gekennzeichnet, daß im Kopfblock ein Feld mit fester Länge (FA) enthalten ist, um die N·Δ Binärelemente aufzunehmen, sowie dadurch, daß der Besetzungsgrad dieses Feldes zur Lieferung der Anzahl N der für die Übertragung der Reihe von M Worten benötigten Blöcke verwendet wird.

3. Übertragungsvorrichtung, in der das Verfahren von Patentanspruch 1 oder 2 angewandt wird, dadurch gekennzeichnet, daß sie einen Sendeteil (1) enthält, um einen Satz von M Worten mit "p" Binärelementen in Blöcke (BLK1, BLK2, ...) mit der Kapazität von (kp-Δ) Binärelementen zu zerlegen, und um einen Kopfblock (BLK0) zu determinieren, der N·Δ Binärelemente (AW1, AW2, ...) enthält, sowie dadurch, daß sie einen Empfangsteil (2) für den Empfang des Kopfblockes und für die Rekonstruktion der N·Δ Binärelemente der übertragenen Worte in den Blöcken, die dem Kopfblock folgen, enthält.
